# EUROPEAN PATENT SPECIFICATION

(11) **EP 4 240 627 B1**
(45) Date of publication and mention of the grant of the patent: **24.09.2025**
(21) Application number: 21805678.6
(22) Date of filing: 01.11.2021
(51) Int. Cl.: B60W 10/04, B60W 10/184, B60W 10/196, B60W 40/10, B60W 30/14, B60W 40/105, B60W 50/038, B60W 20/11

(54) **A METHOD PERFORMED BY A CONTROL DEVICE FOR CONTROLLING THE VELOCITY OF A MINING MACHINE, A CONTROL DEVICE, AND A MINING MACHINE**
VERFAHREN, DAS VON EINER STEUERUNGSVORRICHTUNG ZUR STEUERUNG DER GESCHWINDIGKEIT EINER BERGBAUMASCHINE DURCHGEFÜHRT WIRD, STEUERUNGSVORRICHTUNG UND BERGBAUMASCHINE
PROCÉDÉ MIS EN OEUVRE PAR UN DISPOSITIF DE COMMANDE POUR COMMANDER LA VITESSE D'UNE MACHINE POUR EXPLOITATION MINIÈRE, DISPOSITIF DE COMMANDE ET MACHINE POUR EXPLOITATION MINIÈRE

(30) Priority: 05.11.2020 SE 2051284
(43) Date of publication of application: 13.09.2023
(73) Proprietor: Epiroc Rock Drills Aktiebolag, 701 91 Örebro (SE)
(72) Inventor: SÄRNBRINK, Johan, 702 37 Örebro (SE); MAGNUSSON, Simon, 692 35 Kumla (SE)
(74) Representative: Epiroc Rock Drills AB
(86) International application number: PCT/SE2021/051088
(87) International publication number: WO 2022/098277

(56) References cited:
- WO-A1-2011/126431
- WO-A1-2014/126523
- WO-A1-2016/200309
- US-A1- 2012 205 178
- US-A1- 2017 151 946
- US-A1- 2017 297 573
- US-A1- 2019 375 407

## Description

### TECHNICAL FIELD

The present disclosure relates to a method performed by a control device for controlling the velocity of a mining machine, a control device for controlling the velocity of a mining machine, and a mining machine. The present disclosure further relates to computer program and a computer-readable medium.

### BACKGROUND ART

When driving loaded or unloaded heavy vehicles, such as mining machines, on a descending road, the driver or operator regulates the machine velocity manually by controlling the level of braking force from the braking systems of the vehicle. One way to increase the braking force on the driving wheels is to select a lower gear or to limit the gears, when transmission is in automatic, to a lower gear.

Heavy vehicles may be provided with a number of braking systems, which are different from each other. A continuous braking system may be connected to the powertrain of the vehicle. Such continuous braking system may be an exhaust brake on an internal combustion engine for propulsing the vehicle, an electrodynamic or a hydrodynamic retarder connected to the input shaft or output shaft of the gearbox. In addition to the continuous braking system heavy vehicles are provided with a service braking system arranged at the wheels of the vehicle. The service braking system may comprise friction brakes, such as drum brakes. A vehicle provided with electric machines as a propulsion source may use the electric machines as a braking system.

There are heavy vehicles provided with load sensors and angle sensors, which assist the calibration of predetermined velocities and selected gears in order to ensure that enough braking capacity is available.

US2019/375407 A1 describes a ground vehicle control. WO2016/200309 A1 describes a method for controlling an actual speed of a motor vehicle. WO2011/126431 A1 describes a method for determining speed set-point values vref for a control system in a vehicle.

### SUMMARY OF THE INVENTION

Known solutions do not compensate for any failure of sensors or other failures in the hardware of the vehicle, such as failure in one of the available braking systems of the vehicle. Known calibrated solutions may not be adaptive enough and may require a lot of testing before working. In addition, such calibrated solutions may also need large margins to be able to function satisfactorily. An alternative or a complement to the calibrated solution would be a searching algorithm. However, such searching algorithm may have problems with large and fast changes in situations when for example the vehicle is travelling on a flat road or path, and suddenly the vehicle go over an edge and travelling downhill or in a situation when gear change is needed during operation of the vehicle.

In order to limit the velocity of the vehicle the driver or operator of the vehicle often selects a low gear in the gearbox. Selecting such a low gear, which is unnecessarily low, may result in excessive braking force on the vehicle. Due to the selection the low gears in the gearbox the vehicle may travel in a velocity on a descending road or path, which is unnecessarily low. As a result, the driver of the operator often tries to increase the velocity by reducing the braking force. However, reducing the braking force too much may result in a velocity, which makes the mining machine difficult to control. If the mining machine reaches a velocity limit, an over speed protection arrangement will be activated, which brakes the vehicle sharply.

There is thus a need for an improved method for controlling the velocity of a mining machine. There is also a need to develop an improved control device for controlling the velocity of a mining machine. There is also a need to develop a mining machine comprising such a control device and a computer program and a computer-readable medium for executing the method. There is also a need to develop a mining machine, which may be autonomously controlled.

An object of the invention is thus to provide an improved method for controlling the velocity of a mining machine. A further object is to develop an improved control device for controlling the velocity of a mining machine. Additional objects are respectively to develop a mining machine comprising such a control device, and a computer program and a computer-readable medium for executing the method. A further object is to develop a mining machine, which may be autonomously controlled.

These objects are achieved by a method performed by a control device for controlling the velocity of a mining machine, a control device for controlling the velocity of a mining machine, a mining machine, a computer program and a computer-readable medium according to the appended claims.

According to an aspect of the invention, a method performed by a control device for controlling the velocity of a mining machine is provided. The mining machine comprising: at least one driving wheel configured to transport the machine on a driving surface; at least one propulsion device connected to the at least one driving wheel; at least one braking device connected to the at least one driving wheel; and the control device. The method comprising: estimating a road resistance for the mining machine; calculating a velocity reference for the mining machine based on the capacity and characteristics of at least one continuous braking system of the mining machine, and on a calculated maximal velocity reference received from the estimated road resistance or a demanded speed from an operator of the mining machine; and controlling the velocity of the mining machine to correspond to the calculated velocity reference for the mining machine.

By estimating the road resistance for the mining machine, information is received about how fast the mining machine may travel in the present environment based on information about the braking capacity of the mining machine. If one of the braking systems fails, the road resistance estimation will experience or believe that the environment has changed, for example the slope of the road has become steeper. This result in a lower allowed maximum velocity for the mining machine, achieved from the estimation and calculation according to the method.

This has the advantage that instructions from the control device may control the velocity of the mining machine in relation to the braking capacity from the braking device. The road resistance estimation will compensate for any software error or hardware error that may occur in the mining machine. Every fault or error that reduces braking performance will increase the estimated road resistance. Every fault or error that increases braking performance will decrease the estimated road resistance. Large and fast changes in situations when for example the vehicle is travelling on a flat road or path, and suddenly the vehicle go over an edge and travelling downhill, can be compensated for by an adjusted road resistance. In addition, a gear change may be needed during operation of the vehicle due to the adjusted road resistance. The selected gear in the gearbox may thus be adapted to the adjusted road resistance. The object to provide an improved method for controlling the velocity of a mining machine is thus achieved. According to an aspect of the invention, a computer program comprising instructions which, when the program is executed by a computer, cause the computer to carry out the method. A computer-readable medium comprising instructions, which when executed by a computer, cause the computer to carry out the method. This has the advantage that the method may be comprised in pre-programmed software, which may be implemented into the mining machine suitable for utilizing the method.

According to an aspect of the invention, a control device of a mining machine is provided. The mining machine comprises: at least one driving wheel configured to transport the machine on a driving surface; at least one propulsion device connected to the at least one driving wheel; at least one braking device connected to the at least one driving wheel; and the control device. The control device being configured to: estimate a road resistance for the mining machine; calculate a velocity reference for the mining machine based on the capacity and characteristics of at least one continuous braking system of the mining machine, and on a calculated maximal velocity reference received from the estimated road resistance or a demanded velocity from an operator of the mining machine; and control the velocity of the mining machine to correspond to the calculated velocity reference for the mining machine.

This has the advantage that the mining machine may be driven at a velocity, which is completely controlled by the control device. In addition, the mining machine may be driven at a velocity, which is higher than a driver or an operator of the machine is able to drive the machine. The control device will compensate for any failure in the hardware of the vehicle, such as failure in one of the available braking systems of the vehicle. The control device will react on with large and fast changes in situations when for example the vehicle is travelling on a flat road or path, and suddenly the vehicle go over an edge and travelling downhill or in a situation when gear change is needed during operation of the vehicle. The control device can control the velocity by taking into account the road resistance. Any change in road resistance due to unforeseen occasions, such as hardware failure in the mining machine or circumstances outside the mining machine, such as an increased road slope, will be compensated for by the control device, which will increase or decrease the velocity. Thus, the control device will control the mining machine to a safe velocity adapted to the current situation and to the current road resistance. Over speed in the propulsion unit or gearbox of the mining machine may also be avoided and if the machine is provided with an over speed protection arrangement, this arrangement may never be activated.

According to an aspect of the invention, a mining machine is provided. The mining machine comprises at least one driving wheel configured to transport the machine on a driving surface; at least one propulsion device connected to the at least one driving wheel; and at least one braking device connected to the at least one driving wheel. The mining machine further comprises at least one control device disclosed herein.

Different types of mining machines may be used depending on demands for typical mining operations. Mining machines may work deep underground and driving on flat roads as well as on descending roads and uphill. Such mining machine may be a loader, a truck or a drilling rig. According to an aspect the mining machine may be configured to be controlled autonomous and the mining machine is configured to be controlled by a control device from a control center.

Further objects, advantages and novel features of the present invention will become apparent to one skilled in the art from the following details, and also by putting the invention into practice. Whereas embodiments of the invention are described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present disclosure and further objects and advantages of it, the detailed description set out below should be read together with the accompanying drawings, in which the same reference notations denote similar items in the various figures, and in which:
Fig. 1 illustrates a schematic side view of a mining machine according to an example;
Fig. 2 illustrates a travelling path of a mining machine according to an example;
Fig. 3 shows a flowchart of a method according to an example; and
Fig. 4 schematically illustrates a control device or computer according to an embodiment.

### DETAILED DESCRIPTION

The detailed description with reference to the examples depicted are to be viewed as examples comprising a combination of certain features, which features have been described in detail above. It is thus to be understood that additional examples may be achieved by combining other features into examples not depicted herein. The figures are to be viewed as examples and not mutually exclusive combinations. It should also be noted that all figures shown and described are schematically represented, wherein generic parts of machinery or similar is not depicted for the sake of simplicity.

According to an aspect of the present disclosure, a method performed by a control device for controlling the velocity of a mining machine is provided. The mining machine comprising: at least one driving wheel configured to transport the machine on a driving surface; at least one propulsion device connected to the at least one driving wheel; at least one braking device connected to the at least one driving wheel; and the control device. The method comprising: estimating a road resistance for the mining machine; calculating a velocity reference for the mining machine based on the capacity and characteristics of at least one continuous braking system of the mining machine, and on a calculated maximal velocity reference received from the estimated road resistance or a demanded speed from an operator of the mining machine; and controlling the velocity of the mining machine to correspond to the calculated velocity reference for the mining machine.

The method according to the present disclosure is performed by a control device. The control device may be arranged on the mining machine or at a distance to the mining machine. The control device may comprise a memory in which a modulation of the mining machine is stored. The control device may comprise a memory in which experience data may be stored. The control device may comprise a filter, such as a Kalman filter, for estimation of inputs and variables relating to the mining machine and surroundings affecting the mining machine. The control device may be connected to sensors, which are arranged on the mining machine or at components connected to the mining machine. Such sensors may detect activities or characteristics of the mining machine or of the components connected to the mining machine. The control device may be configured to perform any method step of the method.

The velocity of the mining machine is controlled by the control device. Depending on the type of mining machine the physical characteristics, such as weight, propulsion devices, braking systems, driving wheels, the location of the center of gravity, etc. may be different between different types of mining machines. In addition, a mining machine which is configured to transport heavy and large loads may have a large range of weight difference when loaded and unloaded. This may affect the velocity of the mining machine in different situations.

The mining machine may be any type of mining machine, such as loader, a truck or a drilling rig. The mining machine may be provided with equipment adapted for the special application field the mining machine is used for. The mining machine may thus be a dump truck, loader, drill rig or bolting rig working in a mining or construction environment. In particular the mining machine may be a dump truck or loader performing loading or hauling tasks in an underground mining or construction environment.

The mining machine may be provided with wheels and/or tracks in order to move and drive the mining machine to or between different locations. At least one of the wheels is a driving wheel, which move and drive the mining machine in any direction. The driving wheel may be steerable. The driving wheel may be provided with a tyre. The driving wheel may be configured to generate a motion of a track if the mining machine is a tracked vehicle. The driving wheel is connected to the at least one propulsion device of the mining machine and is propelled by the propulsion device. The mining machine may comprise a number of wheels, wherein the propulsion device propels all of the wheels. Alternatively, some of the wheels may be driving wheels propelled by the propulsion device and some of the wheels may not be propelled by the propulsion device.

The mining machine may be configured to be driven on different types of driving surfaces, such as flat and sloping driving surfaces. The driving surfaces may be sloping uphill or downhills. The driving surfaces may be smooth or rough, or a combination thereof.

The at least one propulsion device may be an internal combustion engine and/or an electrical machine. The electrical machine may work as an electrical motor for propelling the mining machine. The electrical machine may also work as a generator for braking the mining machine. The mining machine may comprise a number of internal combustion engines and/or electrical machines. Thus, the propulsion device may be a hybrid propulsion device. The propulsion device may be arranged within a body of the mining machine. The electrical machines may be arranged in the driving wheels. The mining machine may be provided with energy storage units in order to provide the propulsion device with energy.

The at least one braking device may be an exhaust brake of the internal combustion engine, an electrodynamic or a hydrodynamic retarder connected to a powertrain of the mining machine. If the mining machine is provided which electrical machines as propulsion devices, these electrical machines may be used as a braking device for braking the mining machine. These type of brakes may be part of a continuous braking system of the mining machine. The continuous braking device is connected to the driving wheels of the mining machine via a powertrain of the mining machine. In addition, the mining machine may be provided with a service braking system arranged at the wheels of the mining machine. The braking device in the service braking system may comprise friction brakes, such as drum brakes.

The method step of estimating a road resistance for the mining machine is performed by the control device. The estimation is based on a developed model of the mining machine, which comprises all relevant input data of the mining machine. The relevant input data may be achieved from a Controller Area Network (CAN) of the mining machine. Alternatively or in addition, the input data of the mining machine may be collected from a memory in the control device. Examples of input data for developing the mining machine model is weight, characteristics of different types of braking devices, type of wheels and tires, characteristics of the propulsion devices. Any deviation from the developed mining machine model, which may arise from tire puncture, braking failure, or other hardware failures on the mining machine will be taken care of when estimating the road resistance. If for example a tire puncture occurs, the estimated the road resistance will increase. This adaption to real and actual conditions is based on a detected decrease of velocity of the mining machine due to one or several of the punctured tires.

The method step of calculating a velocity reference for the mining machine is performed by the control device. Calculating the velocity reference for the mining machine is based on the calculated value of the estimated road resistance and also on the available braking capacity of the continuous braking device of the mining machine. That may be all available braking devices except the service braking device. The control device strives to calculate a velocity reference for the mining machine as high as possible taking the braking capacity of the continuous braking system in account. This is a difference comparing to ordinary speed regulators of vehicles driving on public roads, wherein the speed is adapted to speed limit regulations for the specific road, and to other vehicles on the road. The calculated velocity reference for the mining machine may be the maximal velocity the machine may travel and thus braking the machine without using the service brakes and without the velocity increases above the maximal velocity when travelling downhill. Calculating of the velocity reference for the mining machine may be performed by a Kalman filter arranged in the control device. Calculation of a velocity reference downhill is a function of braking system characteristics and capability and road resistance, which is negative, e.g. pulling the vehicle downhill. The velocity, gear selected, retarder activation can be determined in a way that the maximum velocity the vehicle can move downhill by using available continuous braking systems. The speed can either be obtained via the vehicle model or by calculation using road resistance as input.

Controlling the velocity of the mining machine to correspond to the calculated velocity reference for the mining machine is performed by the control device. The velocity may be controlled by increasing or decreasing the power from the propulsion device and/or controlling the continuous braking device by increasing or decreasing braking power of the continuous braking device. A speed sensor may detect the actual velocity of the mining machine and the control device is provided with the actual velocity of the mining machine. In case the actual speed of the mining machine is below the calculated velocity reference for the mining machine, the control device may increase the velocity of the mining machine by increasing power of the propulsion device and/or decreasing braking power of the continuous braking device. In case the actual velocity of the mining machine is above the calculated velocity reference for the mining machine, the control device may decrease the velocity of the mining machine by decreasing power of the propulsion device and/or increasing braking power of the continuous braking device. However, in case the actual velocity of the mining machine of some reason may not decrease even though power of the propulsion device is decreased and/or braking power of the continuous braking systems is increased, the service brakes may be activated in order to reduce the actual velocity of the mining machine. -

According to an aspect, estimating (s101) a road resistance for the mining machine is based on a developed model of the mining machine comprising internal and external forces acting on the driveability of the mining machine, and on the actual velocity of the mining machine.

Internal forces acting on the driveability of the mining machine may be the characteristics of the different types of braking devices in the mining machine and type of wheels and tires, which may have a rolling resistance acting on the mining machine. In addition, there may be friction forces in the powertrain of the mining machine, which act as internal forces on the the driveability of the mining machine. Another internal force may be the weight of the mining machine on roads sloping uphill. Further, internal forces acting on the mining machine may also be receive from the Controller Area Network (CAN) of the mining machine. These internal forces acts as braking forces on the mining machine. In addition there may be internal forces acting to increase the velocity of the mining machine. These forces may be power from the propulsion device of the mining machine and the weight of the mining machine on roads sloping downhill.

External forces acting on the driveability of the mining machine may be road conditions and sloping angle of the road.

According to an aspect, estimating (s101) a road resistance for the mining machine further is based on received signals from at least one sensor detecting physical characteristics of the mining machine.

The sensor may be an inclinometer, a load weighting sensor, a temperature sensor, a pressure sensor, an accelerometer and/or a roadmap. Due to underground service by the mining machine the sensor may be configured receive and send signals to an underground GPS. The inclinometer may be configured to detect sloping angels of downhill and uphill roads. The load weighing sensor may detect the weight of the mining machine and any load carried by the mining machine. The temperature sensor and the pressure sensor may detect the temperature of the braking device and the pressure in an hydraulic system for controlling the braking device. The accelerometer may detect acceleration and retardation of the mining machine. The sensor may also be configured to detect other physical characteristics of the mining machine than what is exemplified above. The at least one sensor may be connected to the control device. Based on received signals from at least one sensor, the estimated road resistance may be adapted to the actual detected physical characteristics of the mining machine.

Thus, the control device may be arranged to determine an operational condition of the mining machine or components of the mining machine based on its operational data, and to provide a user interface with a signal when a highest capacity point of the braking device or braking system is reached or a threshold temperature in the braking device or braking system is reached. Thus, the control device may assist in a continuous monitoring of for example the braking systems of the mining machine, which may be utilized so as to maximize the usage of the braking system regarding capacity. The control device may estimate an operational state of the braking systems based on ingoing operational data coupled with the braking systems. The operational condition may be determined by the control device and provided to a control center or an operator prior to the need of upcoming controlling of the mining machine.

According to an aspect, calculating a velocity reference for the mining machine is based on the capacity and characteristics of at least one continuous braking system of the mining machine, and on a calculated maximal velocity reference received from the estimated road resistance or a demanded velocity from an operator of the mining machine.

The braking device is part of the continuous braking system. The continuous braking system may be an exhaust brake of the internal combustion engine, an electrodynamic or a hydrodynamic retarder connected to a powertrain of the mining machine. If the mining machine is provided which electrical machines as propulsion devices, these electrical machines may be used as a braking device for braking the mining machine. Also this type of brakes may be part of a continuous braking system of the mining machine. Calculating the maximal velocity reference for the mining machine is based on the calculated value of the estimated road resistance and also on the available braking capacity of the continuous braking system of the mining machine. That is all available braking devices except the service braking device. The control device strives to calculate a velocity reference for the mining machine as high as possible taking the braking capacity of the continuous braking device in account. However, the control device may take in to account a demanded velocity from an operator of the mining machine. The demanded velocity from an operator may however never be accepted if the demanded velocity is higher than the calculated maximal velocity reference.

According to an aspect, calculating a velocity reference for the mining machine is further based on a selected gear in a gearbox of the mining machine.

The mining machine may be provided with a gearbox. The gearbox may be connected to one or a number of propulsion devices in the mining machine. If the mining machine is provided with an internal combustion engine and an electrical machine as propulsion devices, one or both of the internal combustion engine and the electrical machine may be connected to the gearbox. Further, the gearbox may be connected to the driving wheels of the mining machine. The selected gear in the gearbox may influence on the velocity and the transferred torque from the propulsion devices to the driving wheels. Calculating the velocity reference for the mining machine may be based on a selected highest gear in the gearbox of the mining machine. The control device selects a suitable gear in the gearbox adapted for the situation and calculates the velocity reference for the mining machine based on the selected gear in a gearbox of the mining machine.

According to an aspect, controlling the velocity of the mining machine to correspond to the calculated velocity reference for the mining machine comprising controlling at least one continuous braking system of the mining machine.

At least one continuous braking system of the mining machine is controlled when driving the mining machine along a descending road or path. The gravity in combination with the power from the at least one propulsion device may strive to increase the velocity of the mining machine. The velocity of the mining machine is controlled to correspond to the calculated velocity reference for the mining machine by controlling at least one of the continuous braking systems of the mining machine. If the velocity of the mining machine tends to increase above the calculated velocity reference for the mining machine, the braking power from the continuous braking system is controlled to increase. Alternatively, or in combination, additional continuous braking systems of the mining machine are activated in order to increase the braking power.

According to an aspect, controlling the velocity of the mining machine to correspond to the calculated velocity reference for the mining machine comprising controlling a service braking system of the mining machine.

In case the actual velocity of the mining machine of some reason may not decrease even though power of the propulsion device is decreased and/or braking power of the available continuous braking systems is increased, the service brakes may be activated in order to reduce the actual velocity of the mining machine.

According to an aspect, controlling the velocity of the mining machine to correspond to the calculated velocity reference for the mining machine comprising controlling the at least one propulsion device of the mining machine.

At least one propulsion device of the mining machine may be controlled when driving the mining machine along a road or a path. The road or path may be flat, uphill or descending for the mining machine when the mining machine is driving on the road or path. When driving on a flat or uphill part of the road or path, the mining machine is propelled by the at least one propulsion device. When driving the mining machine along a descending road or path, the mining machine may also be propelled by the at least one propulsion device. However, if the velocity of the mining machine tends to decrease below or the calculated velocity reference for the mining machine, the power from the propulsion devices are controlled to increase. In the opposite, if the velocity of the mining machine tends to increase above the calculated velocity reference for the mining machine, the power from the propulsion devices are controlled to decrease.

The present disclosure also relates to a computer program comprising instructions which, when the program is executed by a computer, causes the computer to carry out the method disclosed above. The invention further relates to a computer-readable medium comprising instructions, which when executed by a computer causes the computer to carry out the method disclosed above. The method may be comprised in pre-programmed software, which may be implemented into the mining machine suitable for utilizing the method. The pre-programmed software may be stored in the control device. Alternatively, or in combination, the software may be stored in a memory or in computer at a distance from the control device. Furthermore, the present disclosure relates to a control device for controlling the velocity of a mining machine. The mining machine comprises: at least one driving wheel configured to transport the machine on a driving surface; at least one propulsion device connected to the at least one driving wheel; at least one braking device connected to the at least one driving wheel; and the control device. The control device being configured to: estimate a road resistance for the mining machine; calculate a velocity reference for the mining machine based on the capacity and characteristics of at least one continuous braking system of the mining machine, and on a calculated maximal velocity reference received from the estimated road resistance or a demanded velocity from an operator of the mining machine; and control the velocity of the mining machine to correspond to the calculated velocity reference for the mining machine.

The mining machine may be driven at a velocity, which is completely controlled by the control device. The control device will compensate for any failure in the hardware of the vehicle, such as failure in one of the available braking systems of the vehicle. The control device will react on with large and fast changes in situations when for example the vehicle is travelling on a flat road and suddenly the vehicle go over an edge and travelling downhill or in a situation when gear change is needed during operation of the vehicle. The control device may control the velocity by taking into account the road resistance. Any change in road resistance due to unforeseen occasions, such as hardware failure in the mining machine or circumstances outside the mining machine, such as an increased road slope, will be compensated for by the control device, which will increase or decrease the velocity. Thus, the control device will control the mining machine to a safe velocity adapted to the current situation and to the current road resistance.

It will be appreciated that all the examples described for the method aspect of the disclosure performed by the control device are also applicable to the mining machine and the control device aspect of the disclosure. That is, the control device may be configured to perform any one of the steps of the method according to the various examples described above. Thus, according to the following aspects, the control device may be configured to perform the method steps according to the corresponding examples described above.

According to an aspect, the control device may thus be configured to estimate the road resistance for the mining machine based on a developed model of the mining machine comprising internal and external forces acting on the driveability of the mining machine, and on the actual velocity of the mining machine. According to a further aspect, the control device may be configured to estimate the road resistance for the mining machine further based on received signals from at least one sensor detecting physical characteristics of the mining machine. According to a further aspect, the control may be configured to calculate the velocity reference for the mining machine based on the capacity and characteristics of at least one continuous braking system of the mining machine, and on a calculated maximal speed received from the estimated road resistance or a demanded velocity from an operator of the mining machine. According to a further aspect, the control device may be configured to calculate the velocity reference for the mining machine further based on a selected gear in a gearbox of the mining machine. According to a further aspect, the control device may be configured to control the velocity of the mining machine to correspond to the calculated velocity reference for the mining machine by controlling at least one continuous braking system of the mining machine. According to a further aspect, the control device may be configured to control the velocity of the mining machine to correspond to the calculated velocity reference for the mining machine by controlling a service braking system of the mining machine. According to a further aspect, the control device may be configured to control the velocity of the mining machine to correspond to the calculated velocity reference for the mining machine by controlling the at least one propulsion device of the mining machine.

The control device may be implemented as a separate entity or distributed in two or more physical entities. The control device may comprise one or more computers. The control device may thus be implemented or realised by the control device comprising a processor and a memory, the memory comprising instructions, which when executed by the processor causes the control device to perform the herein disclosed method.

Furthermore, the present disclosure relates to a mining machine comprising: at least one driving wheel configured to transport the machine on a driving surface; at least one propulsion device connected to the at least one driving wheel; and at least one braking device connected to the at least one driving wheel. The mining machine further comprises at least one control device disclosed herein.

Different types of mining machines may be used depending on demands for typical mining operations. Mining machines working deep underground and driving on flat roads as well as on descending roads and uphill. Such mining machine may be a loader, a truck or a drilling rig. According to an aspect the mining machine may be configured to be controlled autonomous and the mining machine is configured to be controlled by a control device from a control center.

The mining machine being autonomously operated means that the control device of the mining machine is configured to receive commands and instructions from an off-board system, such as the control center, and to execute these commands/instructions. The autonomously operated mining machine may thus be said to be self-operated based on received commands and instructions from the control center. The autonomously operated mining machine may thus be self-operated without an on-board or off-board driver. The control device may be adapted to convert the commands to control signals for controlling the systems and components of the mining machine and thereby control for example the steering, propulsion and braking of the mining machine. Thus, the mining machine is self-driven based on the received commands and instructions. The control device may operate the mining machine autonomously also based on data from the at least one sensor, taking situations that may happen during driving into account.

The present invention will now be further illustrated with reference to the appended figures.

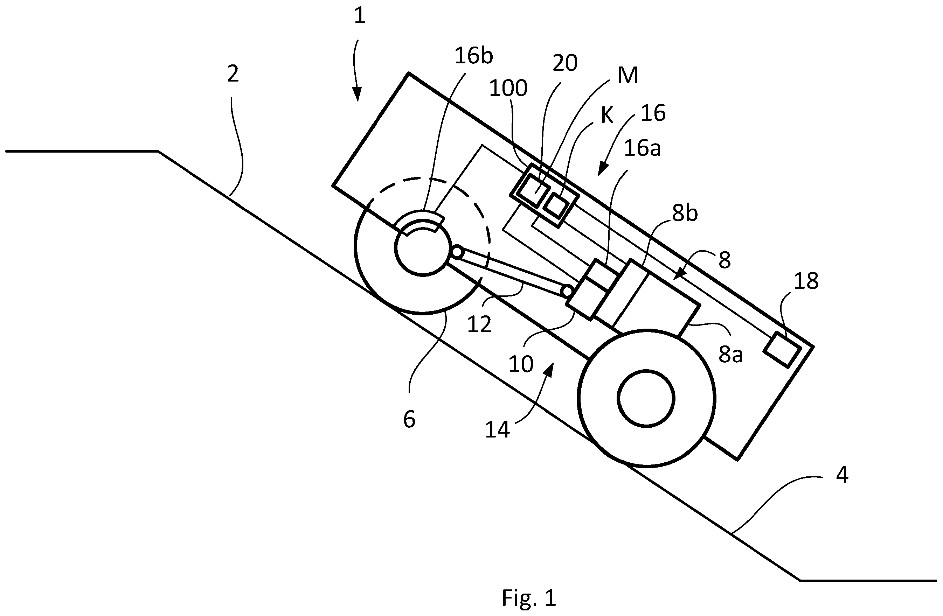

Fig. 1 illustrates a schematic side view of a mining machine 1 according to an example. The mining machine 1 is in fig. 1 driving along travelling road or path 2, which in fig. 1 is a descending travelling road or path 2. The travelling road or path 2 is provided with a driving surface 4. The mining machine 1 comprising driving wheels 6 configured to transport the machine 1 on the driving surface 4. A propulsion device 8 is connected to the driving wheels 6 via a gearbox 10 and a propeller shaft 12. The propulsion device 8 comprises an internal combustion engine 8a and an electrical machine 8b. The propulsion device 8, the gearbox 10, the propeller shaft 12 and the driving wheels 6 are comprised in a powertrain 14 of the mining machine 1. The mining machine 1 comprises a braking device 16 in a continuous braking system 16a. The continuous braking system 16a is connected to the driving wheels 6 via the gearbox 10. A further braking device 16 is connected to the driving wheels 6 of the mining machine 1 as a service brake system 16b. The mining machine 1 further comprises at least one control device 100, which is connected to the propulsion device 8, the gearbox 10 and the braking device 16. Further, the mining machine 1 comprises at least one sensor 18, which is connected to the control device 100. The control device 100 comprises a memory 20 and the control device 100 may receive information from the memory 20 in which a developed model M of the mining machine 1 is stored and/or operational data are stored. The control device 100 may also comprise model over the mining machine in a Kalman filter K.

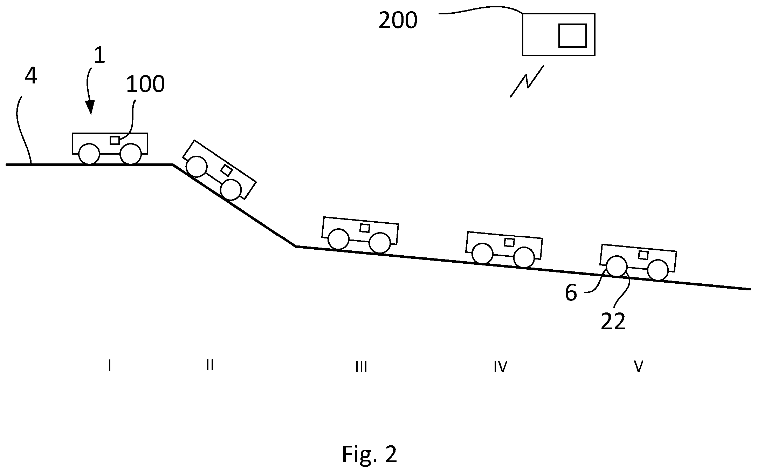

Fig. 2 illustrates a travelling road or path 2 of a mining machine 1 according to an example. The mining machine 1 is illustrated at five different positions I-V along the travelling path 2 in fig. 2. The mining machine 1 travelling from left to right in the figure, from the first position I to the fifth position V. In an example below relating to fig. 2 different situations occur along the travelling path 2. The value of the velocities below are only examples.

In the first position I, a calculated velocity reference for the mining machine 1 has been calculated to 20 km/h, wherein the mining machine 1 is moving from flat driving surface 4 towards a downhill fully loaded. In the second position II, the road resistance estimate has become negative. Thus, the road resistance is less than zero. A new velocity for the mining machine 1 is calculated based on the estimated road resistance and the developed mining machine model M. The new calculated velocity reference for the mining machine 1 using only continuous braking systems 16a (fig. 1) becomes 17 km/h. The control device 100 may use the continuous braking systems 16a to control and fulfill the new calculated velocity reference for the mining machine 1, which is in this case is 17 km/h. In the third position III, the downhill slope decreases. The estimated road resistance signal can be feed forward to reduce the impact of external disturbances like a slope change. Thus, the impact of external disturbances may be taken care of without compensation for the disturbance.

The estimation of a new road resistance will result in the calculation of a new calculated velocity reference for the mining machine 1. The new calculated velocity reference for the mining machine 1 using only continuous braking systems 16a becomes 18 km/h. In the fourth position IV, the mining machine 1 travels at a stationary velocity at 18 km/h and suddenly one continuous braking system 16a is malfunctioning, which results in that the actual velocity of the mining machine 1 is increasing, which results in that the estimated road resistance becomes more negative. The estimation of a new road resistance will result in the calculation of a new calculated velocity reference for the mining machine 1. The new calculated velocity reference for the mining machine 1 using only the remaining continuous braking systems 16a in operation becomes 12 km/h. In the fifth position V, a tire 22 of one of the driving wheels 6 suddenly become punctuated and the mining machine 1 travelling with a flat tire. This results in that the road resistance increases due to an increased rolling resistance of the punctuated tire 22. Due to the increased rolling resistance the actual velocity of the mining machine 1 decreases, which results in that the estimated road resistance becomes less negative. The estimation of a new road resistance will result in the calculation of a new calculated velocity reference for the mining machine 1. The new calculated velocity reference for the mining machine 1 using only continuous braking systems 16a becomes 16 km/h.

The mining machine 1 may be autonomously operated and the control device 100 of the mining machine may thus be configured to receive wireless commands and instructions from a control center 200 to execute these commands instructions based on the above mentioned estimations and calculations.

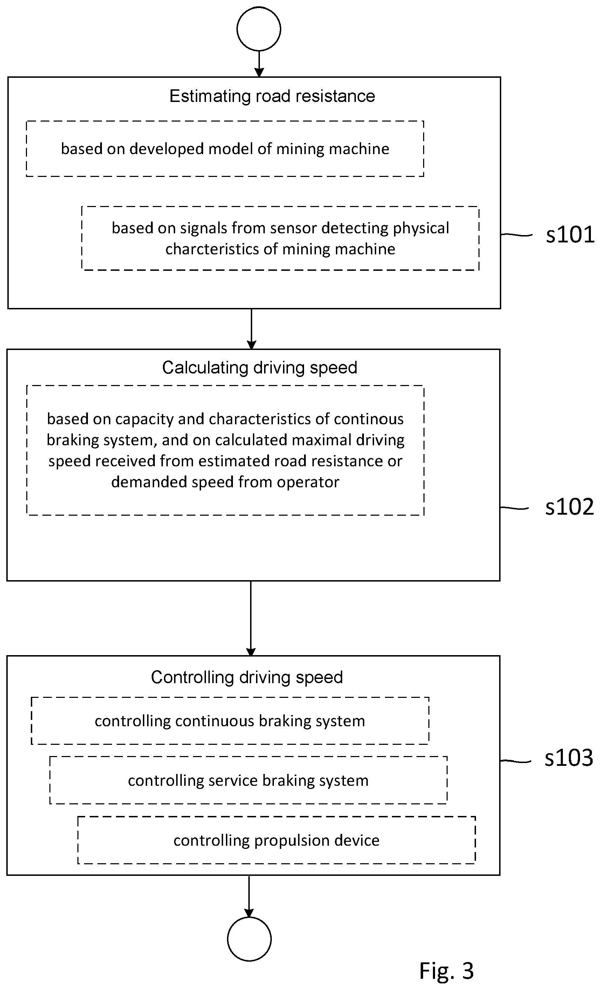

Fig. 3 shows a flowchart of a method according to an example. The method is performed by a control device 100, for controlling the velocity of a mining machine 1. The method thus relates to the controlling the velocity of a mining machine 1 disclosed in figures 1 and 2. The mining machine 1 comprising at least one driving wheel 6 configured to transport the machine 1 on a driving surface 4; at least one propulsion device 8 connected to the at least one driving wheel 6; at least one braking device 16 connected to the at least one driving wheel 6; and the control device 100.

The method comprising: estimating s101a road resistance for the mining machine 1; calculating s102 a velocity reference for the mining machine 1; and controlling s103 the velocity of the mining machine 1 to correspond to the calculated velocity reference for the mining machine 1.

According to an aspect, estimating s101 a road resistance for the mining machine 1 is based on a developed model M of the mining machine 1 comprising internal and external forces acting on the driveability of the mining machine 1, and on the actual velocity of the mining machine 1.

According to an aspect, estimating s101 a road resistance for the mining machine 1 further is based on received signals from at least one sensor 18 detecting physical characteristics of the mining machine 1.

According to an aspect, calculating s102 a velocity reference for the mining machine 1 is based on the capacity and characteristics of at least one continuous braking system 16a of the mining machine 1, and on a calculated maximal velocity reference received from the estimated road resistance or a demanded speed from an operator of the mining machine 1.

According to an aspect, controlling s103 the velocity of the mining machine 1 to correspond to the calculated velocity reference for the mining machine 1 comprising controlling at least one continuous braking system 16a of the mining machine 1.

According to an aspect, controlling s103 the velocity of the mining machine 1 to correspond to the calculated velocity reference for the mining machine 1 comprising controlling a service braking system 16b of the mining machine 1.

According to an aspect, controlling s103 the velocity of the mining machine 1 to correspond to the calculated velocity reference for the mining machine 1 comprising controlling the at least one propulsion device 8 of the mining machine 1.

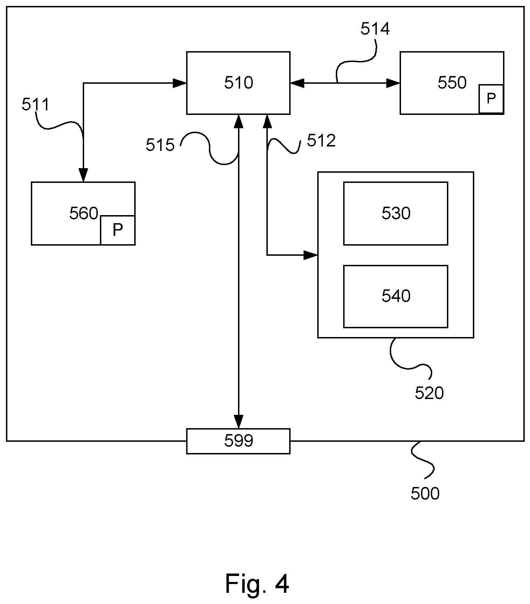

Figure 4 is a diagram of a version of a device 500. The control device 100 described with reference to fig. 1 and fig. 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer programme P which comprises routines for controlling the mining machine. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the programme stored in the memory 560 or the read/write memory 550. When the device 500 runs the programme, methods herein described are executed.

The foregoing description of the embodiments has been furnished for illustrative and descriptive purposes. It is not intended to be exhaustive, or to limit the embodiments to the variations described. Many modifications and variations, within the scope of the invention defined by the appended claims, will obviously be apparent to one skilled in the art. The embodiments have been chosen and described in order to best explicate principles and practical applications, and to thereby enable one skilled in the arts to understand the invention in terms of its various embodiments and with the various modifications that are applicable to its intended use. The components and features specified above may, within the scope of the invention defined by the appended claims, be combined between different embodiments specified.

## Claims

1. A method performed by a control device (100) for controlling the velocity of a mining machine (1), the mining machine (1) comprising:
at least one driving wheel (6) configured to transport the machine (1) on a driving surface (4);
at least one propulsion device (8) connected to the at least one driving wheel (6);
at least one braking device (16) connected to the at least one driving wheel (6); and
the control device (100), the method comprising:
estimating (s101) a road resistance for the mining machine (1);
calculating (s102) a velocity reference for the mining machine (1) based on the capacity and characteristics of at least one continuous braking system (16) of the mining machine (1), and on a calculated maximal velocity reference received from the estimated road resistance or a demanded speed from an operator of the mining machine (1) and
controlling (s103) the velocity of the mining machine (1) to correspond to the calculated velocity reference for the mining machine (1).

2. The method according to claim 1, wherein estimating (s101) a road resistance for the mining machine (1) is based on a developed model (M) of the mining machine (1) comprising internal and external forces acting on the driveability of the mining machine (1), and on the actual velocity of the mining machine (1).

3. The method according to claim 2, wherein estimating (s101) a road resistance for the mining machine (1) is further based on received signals from at least one sensor (18) detecting physical characteristics of the mining machine (1).

4. The method according to any one of the preceding claims, wherein controlling (s103) the velocity of the mining machine (1) to correspond to the calculated velocity reference for the mining machine (1) comprising controlling at least one continuous braking system (16a) of the mining machine (1).

5. The method according to claim 4, wherein controlling (s103) the velocity of the mining machine (1) to correspond to the calculated velocity reference for the mining machine (1) comprising controlling a service braking system (16b) of the mining machine (1).

6. The method according to any one of the claims 1 - 3, wherein controlling (s103) the velocity of the mining machine (1) to correspond to the calculated velocity for the mining machine (1) comprising controlling the at least one propulsion device (8) of the mining machine (1).

7. A computer program (P) comprising instructions which, when the program (P) is executed by a computer (100; 500) of a control device according to claim 9, cause the computer (100; 500) to carry out the method according to any one of the preceding claims.

8. A computer-readable medium comprising instructions, which when executed by a computer (100; 500) of a control device according to claim 9, cause the computer (100; 500) to carry out the method according to any one of claims 1-67.

9. A control device (100) for controlling the velocity of a mining machine (1), the mining machine (1) comprising:
at least one driving wheel (6) configured to transport the machine (1) on a driving surface (4);
at least one propulsion device (8) connected to the at least one driving wheel (6);
at least one braking device (16) connected to the at least one driving wheel (6); and
the control device (100), the control device (100) being configured to:
estimate a road resistance for the mining machine (1);
calculate a velocity reference for the mining machine (1) based on the capacity and characteristics of at least one continuous braking system (16a) of the mining machine (1), and on a calculated maximal velocity reference received from the estimated road resistance or a demanded velocity from an operator of the mining machine (1) and
control the velocity of the mining machine (1) to correspond to the calculated velocity reference for the mining machine (1).

10. The control device (100) according to claim 9, wherein the control device (100) being configured to estimate the road resistance for the mining machine (1) based on a developed model of the mining machine (1) comprising internal and external forces acting on the driveability of the mining machine (1), and on the actual velocity of the mining machine (1).

11. The control device (100) according to claim 10, wherein the control device (100) being configured to estimate the road resistance for the mining machine (1) further based on received signals from at least one sensor (18) detecting physical characteristics of the mining machine (1).

12. The control device (100) according to any one of claims 9 - 11, wherein the control device (100) being configured to control the velocity of the mining machine (1) to correspond to the calculated velocity reference for the mining machine (1) by controlling at least one continuous braking system (16a) of the mining machine (1).

13. The control device (100) according to any one of claim 12, wherein the control device (100) being configured to control the velocity of the mining machine (1) to correspond to the calculated velocity reference for the mining machine (1) by controlling a service braking system (16b) of the mining machine (1).

14. The control device (100) according to any one of claims 9- 11, wherein the control device (100) being configured to control the velocity of the mining machine (1) to correspond to the calculated velocity reference for the mining machine (1) by controlling the at least one propulsion device (8) of the mining machine (1).

15. A mining machine (1) comprising:
at least one driving wheel (6) configured to transport the machine (1) on a driving surface (4);
at least one propulsion device (8) connected to the at least one driving wheel (6); and
at least one braking device (16) connected to the at least one driving wheel (6), wherein the mining machine (1) comprises at least one control device (100) according to any one of claims 9- 14.

## Patentansprüche

1. Verfahren, das von einer Steuerungsvorrichtung (100) zur Steuerung der Geschwindigkeit einer Bergbaumaschine (1) durchgeführt wird, wobei die Bergbaumaschine (1) Folgendes umfasst:
mindestens ein Treibrad (6), das dazu konfiguriert ist, die Maschine (1) auf einer Antriebsfläche (4) zu transportieren;
mindestens eine Antriebsvorrichtung (8), die mit dem mindestens einen Treibrad (6) verbunden ist;
mindestens eine Bremsvorrichtung (16), die mit dem mindestens einen Treibrad (6) verbunden ist; und
die Steuerungsvorrichtung (100),
wobei das Verfahren Folgendes umfasst:
Schätzen (s101) eines Rollwiderstands für die Bergbaumaschine (1);
Berechnen (s102) einer Geschwindigkeitsreferenz für die Bergbaumaschine (1) basierend auf der Kapazität und Merkmalen mindestens eines ununterbrochenen Bremssystems (16) der Bergbaumaschine (1) und auf einer berechneten maximalen Geschwindigkeitsreferenz, die von dem geschätzten Rollwiderstand empfangen wird, oder einer angefragten Geschwindigkeit von einem Betreiber der Bergbaumaschine (1) und
Steuern (s103) der Geschwindigkeit der Bergbaumaschine (1) so, dass sie der berechneten Geschwindigkeitsreferenz für die Bergbaumaschine (1) entspricht.

2. Verfahren nach Anspruch 1, wobei Schätzen (s101) eines Rollwiderstands für die Bergbaumaschine (1) auf einem entwickelten Model (M) der Bergbaumaschine (1), das innere und äußere Kräfte umfasst, die auf die Fahrbarkeit der Bergbaumaschine (1) einwirken, und auf der tatsächlichen Geschwindigkeit der Bergbaumaschine (1) basiert.

3. Verfahren nach Anspruch 2, wobei Schätzen (s101) eines Rollwiderstands für die Bergbaumaschine (1) weiter auf empfangenen Signalen von mindestens einem Sensor (18) basiert, der physikalische Merkmale der Bergbaumaschine (1) erfasst.

4. Verfahren nach einem der vorstehenden Ansprüche, wobei Steuern (s103) der Geschwindigkeit der Bergbaumaschine (1) so, dass sie der berechneten Geschwindigkeitsreferenz für die Bergbaumaschine (1) entspricht, Steuern mindestens eines ununterbrochenen Bremssystems (16a) der Bergbaumaschine (1) umfasst.

5. Verfahren nach Anspruch 4, wobei Steuern (s103) der Geschwindigkeit der Bergbaumaschine (1) so, dass sie der berechneten Geschwindigkeitsreferenz für die Bergbaumaschine (1) entspricht, Steuern eines Dienstbremssystems (16b) der Bergbaumaschine (1) umfasst.

6. Verfahren nach einem der Ansprüche 1 bis 3, wobei Steuern (s103) der Geschwindigkeit der Bergbaumaschine (1) so, dass sie der berechneten Geschwindigkeit für die Bergbaumaschine (1) entspricht, Steuern der mindestens einen Antriebsvorrichtung (8) der Bergbaumaschine (1) umfasst.

7. Computerprogramm (P), das Anweisungen umfasst, die, wenn das Programm (P) von einem Computer (100; 500) einer Steuerungsvorrichtung nach Anspruch 9 ausgeführt wird, den Computer (100; 500) veranlassen, das Verfahren nach einem der vorstehenden Ansprüche durchzuführen.

8. Computerlesbares Medium, das Anweisungen umfasst, die, wenn sie von einem Computer (100; 500) einer Steuerungsvorrichtung nach Anspruch 9 ausgeführt werden, den Computer (100; 500) veranlassen, das Verfahren nach einem der Ansprüche 1-6 durchzuführen.

9. Steuerungsvorrichtung (100) zur Steuerung der Geschwindigkeit einer Bergbaumaschine (1), wobei die Bergbaumaschine (1) Folgendes umfasst:
mindestens ein Treibrad (6), das dazu konfiguriert ist, die Maschine (1) auf einer Antriebsfläche (4) zu transportieren;
mindestens eine Antriebsvorrichtung (8), die mit dem mindestens einen Treibrad (6) verbunden ist;
mindestens eine Bremsvorrichtung (16), die mit dem mindestens einen Treibrad (6) verbunden ist; und
die Steuerungsvorrichtung (100),
wobei die Steuerungsvorrichtung (100) konfiguriert ist zum:
Schätzen eines Rollwiderstands für die Bergbaumaschine (1);
Berechnen einer Geschwindigkeitsreferenz für die Bergbaumaschine (1) basierend auf der Kapazität und Merkmalen mindestens eines ununterbrochenen Bremssystems (16a) der Bergbaumaschine (1) und auf einer berechneten maximalen Geschwindigkeitsreferenz, die von dem geschätzten Rollwiderstand empfangen wird, oder einer angefragten Geschwindigkeit von einem Betreiber der Bergbaumaschine (1) und
Steuern der Geschwindigkeit der Bergbaumaschine (1) so, dass sie der berechneten Geschwindigkeitsreferenz für die Bergbaumaschine (1) entspricht.

10. Steuerungsvorrichtung (100) nach Anspruch 9, wobei die Steuerungsvorrichtung (100) konfiguriert ist, um den Rollwiderstand für die Bergbaumaschine (1) basierend auf einem entwickelten Model (M) der Bergbaumaschine (1), das innere und äußere Kräfte umfasst, die auf die Fahrbarkeit der Bergbaumaschine (1) einwirken, und auf der tatsächlichen Geschwindigkeit der Bergbaumaschine (1) zu schätzen.

11. Steuerungsvorrichtung (100) nach Anspruch 10, wobei die Steuerungsvorrichtung (100) konfiguriert ist, um den Rollwiderstand für die Bergbaumaschine (1) weiter basierend auf empfangenen Signalen von mindestens einem Sensor (18), der physikalische Merkmale der Bergbaumaschine (1) erfasst, zu schätzen.

12. Steuerungsvorrichtung (100) nach einem der Ansprüche 9 - 11, wobei die Steuerungsvorrichtung (100) konfiguriert ist, um die Geschwindigkeit der Bergbaumaschine (1) so zu steuern, dass sie der berechneten Geschwindigkeitsreferenz für die Bergbaumaschine (1) entspricht, indem sie mindestens ein ununterbrochenes Bremssystem (16a) der Bergbaumaschine (1) steuert.

13. Steuerungsvorrichtung (100) nach einem von Anspruch 12, wobei die Steuerungsvorrichtung (100) konfiguriert ist, um die Geschwindigkeit der Bergbaumaschine (1) so zu steuern, dass sie der berechneten Geschwindigkeitsreferenz für die Bergbaumaschine (1) entspricht, indem sie ein Dienstbremssystem (16b) der Bergbaumaschine (1) steuert.

14. Steuerungsvorrichtung (100) nach einem der Ansprüche 9-11, wobei die Steuerungsvorrichtung (100) konfiguriert ist, um die Geschwindigkeit der Bergbaumaschine (1) so zu steuern, dass sie der berechneten Geschwindigkeitsreferenz für die Bergbaumaschine (1) entspricht, indem sie die mindestens eine Antriebsvorrichtung (8) der Bergbaumaschine (1) steuert.

15. Bergbaumaschine (1), umfassend:
mindestens ein Treibrad (6), das dazu konfiguriert ist, die Maschine (1) auf einer Antriebsfläche (4) zu transportieren;
mindestens eine Antriebsvorrichtung (8), die mit dem mindestens einen Treibrad (6) verbunden ist; und
mindestens eine Bremsvorrichtung (16), die mit dem mindestens einen Treibrad (6) verbunden ist, wobei die Bergbaumaschine (1) mindestens eine Steuerungsvorrichtung (100) nach einem der Ansprüche 9-14 umfasst.

## Revendications

1. Procédé mis en œuvre par un dispositif de commande (100) pour commander la vitesse d'une machine d'exploitation minière (1), la machine d'exploitation minière (1) comprenant :
au moins une roue motrice (6) configurée pour transporter la machine (1) sur une chaussée (4) ;
au moins un dispositif de propulsion (8) connecté à l'au moins une roue motrice (6) ;
au moins un dispositif de freinage (16) connecté à l'au moins une roue motrice (6) ; et
le dispositif de commande (100), le procédé comprenant :
une estimation (s101) d'une résistance à l'avancement pour la machine d'exploitation minière (1) ;
un calcul (s102) d'une référence de vitesse pour la machine d'exploitation minière (1) sur la base de la capacité et des caractéristiques d'au moins un système de freinage continu (16) de la machine d'exploitation minière (1), et sur la base d'une référence de vitesse maximale calculée reçue à partir de la résistance à l'avancement estimée ou d'une vitesse demandée provenant d'un opérateur de la machine d'exploitation minière (1) et
une commande (s103) de la vitesse de la machine d'exploitation minière (1) de manière à correspondre à la référence de vitesse calculée pour la machine d'exploitation minière (1).

2. Procédé selon la revendication 1, dans lequel l'estimation (s101) d'une résistance à l'avancement pour la machine d'exploitation minière (1) est basée sur un modèle développé (M) de la machine d'exploitation minière (1) comprenant des forces internes et externes agissant sur la maniabilité de la machine d'exploitation minière (1), et sur la vitesse réelle de la machine d'exploitation minière (1).

3. Procédé selon la revendication 2, dans lequel l'estimation (s101) d'une résistance à l'avancement pour la machine d'exploitation minière (1) est en outre basée sur des signaux reçus depuis au moins un capteur (18) détectant des caractéristiques physiques de la machine d'exploitation minière (1).

4. Procédé selon l'une quelconque des revendications précédentes, dans lequel la commande (s103) de la vitesse de la machine d'exploitation minière (1) de manière à correspondre à la référence de vitesse calculée pour la machine d'exploitation minière (1) comprend une commande d'au moins un système de freinage continu (16a) de la machine d'exploitation minière (1).

5. Procédé selon la revendication 4, dans lequel la commande (s103) de la vitesse de la machine d'exploitation minière (1) de manière à correspondre à la référence de vitesse calculée pour la machine d'exploitation minière (1) comprend une commande d'un système de freinage de service (16b) de la machine d'exploitation minière (1).

6. Procédé selon l'une quelconque des revendications 1 à 3, dans lequel la commande (s103) de la vitesse de la machine d'exploitation minière (1) de manière à correspondre à la vitesse calculée pour la machine d'exploitation minière (1) comprend une commande de l'au moins un dispositif de propulsion (8) de la machine d'exploitation minière (1).

7. Programme informatique (P) comprenant des instructions qui, lorsque le programme (P) est exécuté par un ordinateur (100 ; 500) d'un dispositif de commande selon la revendication 9, amènent l'ordinateur (100 ; 500) à réaliser le procédé selon l'une quelconque des revendications précédentes.

8. Support lisible par un ordinateur comprenant des instructions qui, lorsqu'elles sont exécutées par un ordinateur (100 ; 500) d'un dispositif de commande selon la revendication 9, amènent l'ordinateur (100 ; 500) à effectuer le procédé selon l'une quelconque des revendications 1 à 6.

9. Dispositif de commande (100) pour commander la vitesse d'une machine d'exploitation minière (1), la machine d'exploitation minière (1) comprenant :
au moins une roue motrice (6) configurée pour transporter la machine (1) sur une chaussée (4) ;
au moins un dispositif de propulsion (8) connecté à l'au moins une roue motrice (6) ;
au moins un dispositif de freinage (16) connecté à l'au moins une roue motrice (6) ; et
le dispositif de commande (100), le dispositif de commande (100) étant configuré pour :
estimer une résistance à l'avancement pour la machine d'exploitation minière (1) ;
calculer une référence de vitesse pour la machine d'exploitation minière (1) sur la base de la capacité
et des caractéristiques d'au moins un système de freinage continu (16a) de la machine d'exploitation minière (1), et sur la base d'une référence de vitesse maximale calculée reçue à partir de la résistance à l'avancement estimée ou d'une vitesse demandée provenant d'un opérateur de la machine d'exploitation minière (1) et
commander la vitesse de la machine d'exploitation minière (1) de manière à correspondre à la référence de vitesse calculée pour la machine d'exploitation minière (1).

10. Dispositif de commande (100) selon la revendication 9, dans lequel le dispositif de commande (100) est configuré pour estimer la résistance à l'avancement pour la machine d'exploitation minière (1) sur la base d'un modèle développé de la machine d'exploitation minière (1) comprenant des forces internes et externes agissant sur la maniabilité de la machine d'exploitation minière (1), et sur la vitesse réelle de la machine d'exploitation minière (1).

11. Dispositif de commande (100) selon la revendication 10, dans lequel le dispositif de commande (100) est configuré pour estimer la résistance à l'avancement pour la machine d'exploitation minière (1) sur la base en outre de signaux reçus depuis au moins un capteur (18) détectant des caractéristiques physiques de la machine d'exploitation minière (1).

12. Dispositif de commande (100) selon l'une quelconque des revendications 9 à 11, dans lequel le dispositif de commande (100) est configuré pour commander la vitesse de la machine d'exploitation minière (1) de manière à correspondre à la référence de vitesse calculée pour la machine d'exploitation minière (1) par la commande d'au moins un système de freinage continu (16a) de la machine d'exploitation minière (1).

13. Dispositif de commande (100) selon la revendication 12, dans lequel le dispositif de commande (100) est configuré pour commander la vitesse de la machine d'exploitation minière (1) de manière à correspondre à la référence de vitesse calculée pour la machine d'exploitation minière (1) par la commande d'un système de freinage de service (16b) de la machine d'exploitation minière (1).

14. Dispositif de commande (100) selon l'une quelconque des revendications 9 à 11, dans lequel le dispositif de commande (100) est configuré pour commander la vitesse de la machine d'exploitation minière (1) de manière à correspondre à la référence de vitesse calculée pour la machine d'exploitation minière (1) par la commande de l'au moins un dispositif de propulsion (8) de la machine d'exploitation minière (1).

15. Machine d'exploitation minière (1) comprenant :
au moins une roue motrice (6) configurée pour transporter la machine (1) sur une chaussée (4) ;
au moins un dispositif de propulsion (8) connecté à l'au moins une roue motrice (6) ; et
au moins un dispositif de freinage (16) connecté à l'au moins une roue motrice (6), dans laquelle la machine d'exploitation minière (1) comprend au moins un dispositif de commande (100) selon l'une quelconque des revendications 9 à 14.
